# EUROPEAN PATENT APPLICATION

(11) **EP 2 876 517 A1**
(43) Date of publication of application: **27.05.2015**
(21) Application number: 14193732.6
(22) Date of filing: 18.11.2014
(51) Int. Cl.: G05B 19/401, H01Q 3/02

(54) **Method and system for characterising pointing errors of a steerable antenna**

(30) Priority: 20.11.2013 IT RM20130640
(71) Applicant: MBDA ITALIA S.p.A., 00131 Roma (IT)
(72) Inventor: Borzacchiello, Domenico, I-00131 Roma (IT); Molitierno, Raffaele, I-00131 Roma (IT)
(74) Representative: Carangelo, Pierluigi

(57) **Abstract**

A method (100) for characterising pointing errors of a steerable antenna (10) is described, wherein the antenna comprises:
- a receiver and/or transmitter device of electromagnetic radiations (11), having a device body delimited by an outer surface:
- an electromechanical movement and support system which permits the rotation of the receiver and/or transmitter device (11) in space and which is adapted to receive at least one control signal (W1) containing control data adapted to define a theoretical pointing direction selected from a plurality of preselected theoretical pointing directions and to rotate the receiver and/or transmitter device in response to said reception.

The method (100) comprises the steps of:
- positioning (101) the steerable antenna (10) in a volume of action of a coordinate measurement numerical control machine (2), the machine comprising a measuring probe (5) and a movement system (6,7,8) of the measuring probe (5) in the volume of action of the machine (2);
- sending (103) the aforesaid control signal (W1) to the electromechanical movement and support system (12, 13, 14) to orient the transmitter and/or receiver device (11) ;
- acquiring (107) by means of said machine (2), moving said measuring probe (5), a measurement of the position in space of at least a point of said outer surface of the device body;
- calculating (111) by means of said acquired measurement a real pointing direction, which on account of said errors may be different from said selected theoretical pointing direction, and calculating at least a difference value between said theoretical pointing direction and said real pointing direction, said difference value representing the pointing error of the steerable antenna (10).

## Description

The present description refers to the technical field of steerable antennas and in particular relates to a method and a system for characterising pointing errors of a steerable antenna.

Steerable antennas have been known of for a long time comprising an orientable receiver and/or transmitter device of electromagnetic radiation, the pointing direction of which can be controlled by means of an electromechanical movement and support system which makes it possible to orient the orientable reception and/or transmission device in space, for example to widen the scanning angle.

In some cases, such as for example in the case of the antennas of a missile seeker, the electromechanical movement and support system used is comparable to an altazimuth system and can be electronically controlled to enable the orientable reception and/or transmission device to rotate around two axes.

Theoretically and in first approximation, the electromechanical movement and support system, or steering system, must guarantee highly accurate pointing. The electronic control system of the electromechanical movement and support system is generally developed on the basis of the theoretical mechanical behaviour of the movement and support system and various sensors on board the steerable antenna such as position, and/or speed and/or gyroscopic associated with the electromechanical movement and support system are used to realise a closed-loop control. The result of the sensor reading is what is happening locally; it is therefore important that downstream of this reading there are no deformations or behaviours undetectable by the sensors which could lead to an incorrect command of the electromechanical movement and support system. These deviations from the standard are generally commonly referred to using the term aberrations. In theory the sensors should be placed as close as possible to the electromagnetic radiation transmitter and/or receiver so that the control system always knows precisely the actual location of the same. A position distant therefrom, with a series of mechanical intermediate controls will introduce mechanical aberrations due to the imprecision of the couplings, elastic deformations of the system due to external stresses and imprecision in the machining of mechanical parts.

The ideal would be to be able to couple the sensors directly under the transmitter and/or receiver coupled to the latter with rigid connections, without mechanical intermediate controls. However, this tends to limit the cone angle; and all the more so the bigger the sensors (and motors) are. For this reason it is not possible to directly couple the sensors to the orientable receiver and/or transmitter device of electromagnetic radiation and in real systems there are always pointing errors undetectable by sensors.

For the above reasons, in systems that require high pointing accuracy, the characterisation of the aberrations i.e. of the pointing errors is required, of each single specimen produced by the steerable antenna. However the characterisation methods of the prior art are particularly complex and require measurement of the pointing errors by running tests on the complete and assembled system which includes the steerable antenna. This type of test is known by the name of the HWIL test (Hardware In the Loop). The test methods on the complete and assembled system have the drawback of the fact that steerable antennas which, following the tests turn out to be a posteriori non compliant with certain standards of testing or validation, have been assembled in more complex systems in vain, thus leading to an increase in production costs.

A general purpose of the present description is to make available a characterisation method of the pointing errors of a steerable antenna which does not have the drawbacks mentioned above with reference to the prior art.

This and other purposes are achieved by means of a characterisation method as defined in claim 1 in its most general form, and in the dependent claims in some of its particular embodiments.

The invention will be clearer to understand from the following detailed description of its embodiments, made by way of a non-limiting example with reference to the appended drawings, wherein:
- Figure 1 shows a schematic view of an embodiment of a system for the characterisation of pointing errors of a steerable antenna;
- Figure 2 shows a schematic flow diagram of an embodiment of a method for the characterisation of pointing errors of a steerable antenna.

In the appended drawings, elements which are the same or similar will be indicated using the same reference numerals.

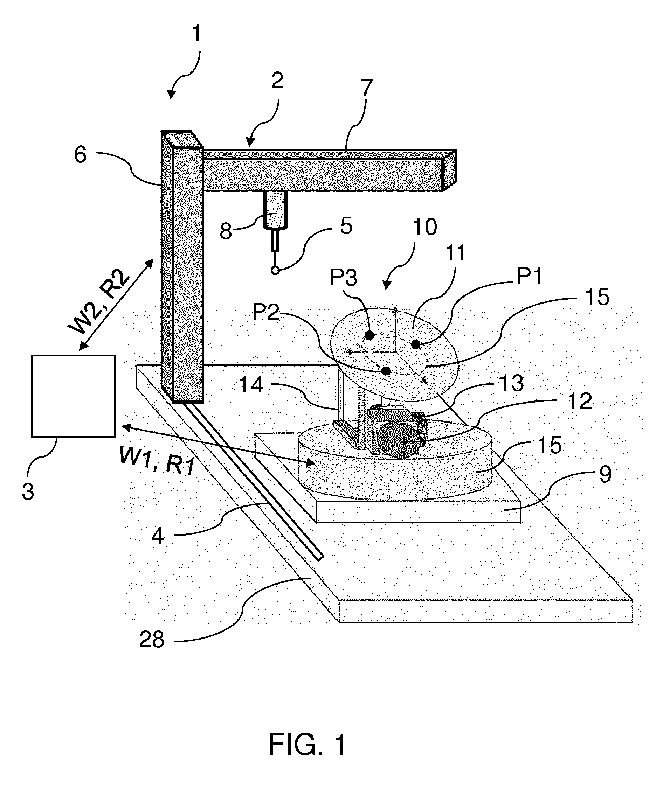

Figure 1 schematically shows a system 1 for characterising pointing errors of a steerable antenna 10.

The steerable antenna 10 comprises a receiver and/or transmitter device of electromagnetic radiation 11 which is steerable and which has a device body delimited by an outer surface. For example, such device body is an essentially disc-shaped body which includes a circular outer surface which in the example is provided for on the face of the disc facing the pointing direction of the receiver and/or transmitter device of electromagnetic radiation 11. For example, and without thereby introducing any limitation, the steerable antenna 10 is the antenna of a missile seeker. In an alternative embodiment the steerable antenna 10 is the antenna of a data transmission system, of the terrestrial or satellite type.

The steerable antenna 10 further comprises an electromechanical movement and support system 12-15 which permits the rotation of the receiver and/or transmitter device of electromagnetic radiation 11 in space and which is adapted to receive at least one control signal containing control data corresponding to a theoretical pointing direction (i.e. making it possible to define a theoretical pointing direction) selected from a plurality of preselected theoretical pointing directions and to rotate the receiver and/or transmitter device of electromagnetic radiation 11 in response to the reception of said control signal. Preferably the aforesaid transmitter and/or receiver device 11 is adapted to transmit and/or receive microwave electromagnetic radiations and/or radiations in the infrared spectrum.

Preferably the electromechanical movement and support system 12-15 is an altazimuth system. More preferably, the electromechanical movement and support system 12-15 comprises a motorised cardanic support 12-14 which makes it possible to rotate the transmitter and/or receiver device 11 along two rotation axes orthogonal to each other. According to one embodiment, the electromechanical movement and support system comprises a base 15, at least one motor 12, 13 and a transmission system of the movement operatively interposed between the motor 12, 13 and the transmitter and/or receiver device of electromagnetic radiation 11. According to one embodiment the aforesaid motor 12, 13 comprises or is coupled to an angular position sensor (resolver). Preferably, the aforesaid motor comprises two motors 12, 13 fitted with or coupled to respective angular position sensors. Each of said motors 12, 13 permits the rotation of the transmitter and/or receiver device 11 around a respective rotation axis. Electromechanical movement and support systems of the type described above are known to experts in the field and will therefore not be described here in greater detail.

The system 1 for characterising pointing errors of the steerable antenna 10 comprises a spatial coordinate measurement numerical control machine 2 comprising a measuring probe 5 and a movement system 6, 7, 8 of the measuring probe 5 in the volume of action of the machine 2. For example, the numerical control machine 2 comprises a stabilised support surface 28 and a vertical arm 6 adapted to translate in relation to the support surface, e.g. along a straight guide 4. In such example, the numerical control machine 2 comprises a horizontal arm 7 constrained to the vertical arm 6, and adapted to slide along said vertical arm 6, which thus acts as a guide. In the aforesaid example, the machine 1 further comprises a terminal arm 8 having an end constrained to the horizontal arm 7 and an opposite end to which the probe 5 is constrained. For example the end arm 8 is slidingly constrained to the horizontal arm 7. Preferably the terminal arm 8 is an articulated arm which enables the measuring probe 5 to rotate in space around at least one rotation axis.

According to one embodiment, the measuring probe 5 comprises a laser sensor, adapted to permit a contactless measurement of position or distance. According to an alternative embodiment, the aforesaid measuring probe 5 comprises a touch probe.

A possible non-limiting example of the aforesaid coordinate measuring numerical control machine 2 is given by the machine currently marketed under the brand name DEA ™ Silver Classic made by Hexagon S.P.A.

The system 1 for the characterisation of pointing errors of the steerable antenna 10 also comprises an electronic control unit 3 adapted to control the steerable antenna 10. Preferably the electronic control unit 3 is such as to also control the numerical control machine 2. For example, it may be provided for that the electronic control unit 3 is an industrial or personal computer, provided on board with one or more control softwares and comprising a first circuit board for controlling the steerable antenna 10 and a second circuit board for controlling the numerically controlled machine 2.

The electronic control unit 3 is such as to send to the steerable antenna 10 at least a first control signal W1 and is preferably such as to receive from the steerable antenna a data signal R1, for example comprising data acquired from one or more sensors of the steerable antenna 10.

The electronic control unit 3 is such as to send the numerical control machine 2 at least a second control signal W2, and is preferably such as to receive from the machine 2 a data signal D2, for example comprising data acquired by the measuring probe 5.

According to one embodiment, the first control signal W1 contains control data adapted to define a theoretical pointing direction selected from a plurality of preselected theoretical pointing directions and the second control signal W2 contains information which enables the machine 2 to identify a theoretical position of at least one point P1, P2, P3 of the surface of the steerable antenna 10, and in particular of the transmitter and/or receiver device 11, in a condition in which the steerable antenna 10 points along the theoretical pointing direction.

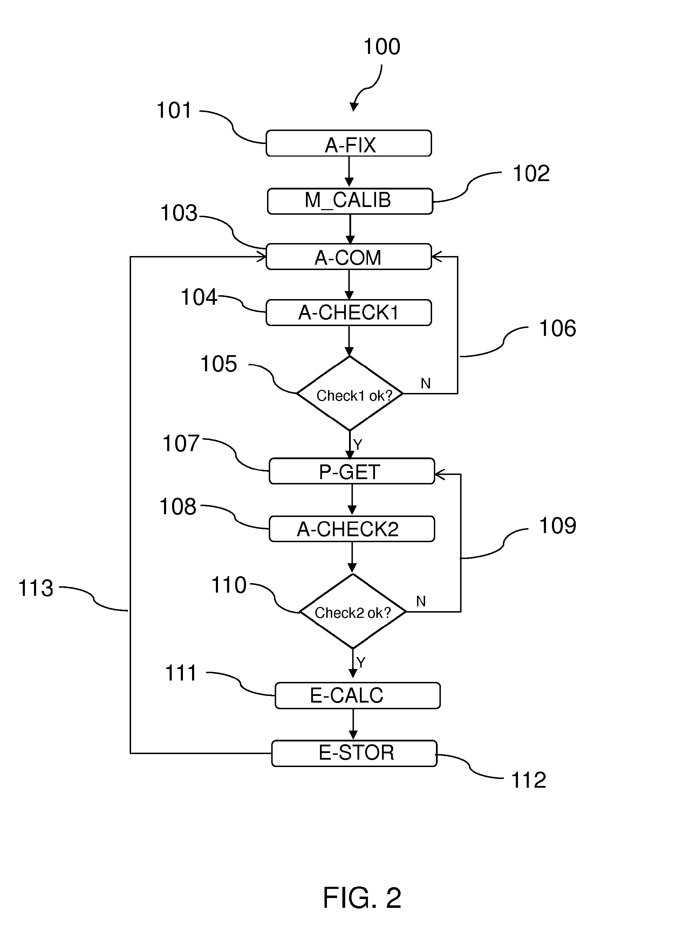

With reference to figure 2, an embodiment will now be described of a measuring or characterisation method 100 using a measurement system 1 of the type described above, of the pointing errors of a generic steerable antenna 10 comprising:
- a receiver and/or transmitter device of electromagnetic radiation 11, having a device body delimited by an outer surface:
- an electromechanical movement and support system 12, 13, 14 which permits the rotation of the receiver and/or transmitter device 11 in space and which is adapted to receive at least one control signal W1 containing control data adapted to define a theoretical pointing direction selected from a plurality of preselected theoretical pointing directions and to rotate the receiver and/or transmitter device 11 in response to said reception.

In its most general form, the method 100 comprises the steps of:
- positioning 101 "A-FIX" the steerable antenna 10 in a volume of action of a spatial coordinate measurement numerical control machine 2, the machine comprising a measuring probe 5 and a movement system 6, 7, 8 of the measuring probe 5 in the volume of action of the machine 2;
- sending 103 "A-COM" the aforesaid control signal W1 to the electromechanical movement and support system 12, 13, 14 to orient the transmitter and/or receiver device 11;
- acquiring 107 "P-GET" by means of said machine 2 (for example by means of the signal R2 in figure 1), by moving said measuring probe 5, a measurement of the position in space of at least one point of said outer surface of the device body;
- calculating 111 "E-CALC" by means of said acquired measurement a real pointing direction, which on account of said errors may be different from said selected theoretical pointing direction, and calculating at least a difference value between said theoretical pointing direction and said real pointing direction, said difference value representing the pointing error of the steerable antenna 10.

Preferably the step of acquiring 107 comprises a step of sending to said machine 2 (in the example via the signal W2) information which allows the machine 2 to identify a theoretical position of at least one point P1, P2, P3 of the surface of the steerable antenna 10 in a condition in which the antenna points along the theoretical pointing direction.

According to one embodiment, the machine 2 comprises a stabilised support surface 28 and the positioning step 101 comprises an operation of stably attaching the electromechanical movement and support system 12, 13, 14 of the steerable antenna 10 to the stabilised support surface 28. In such embodiment, the method 100 comprises an initial calibration step 102 M_CALIB comprising an operation of measuring the position in space of a known reference point of the steerable antenna 10 and of setting a measurement reference system centred on said measured position. For example, if the transmitter and/or receiver device 11 has a flat and circular front face, the aforesaid known reference point is the centre of said face for example in a condition in which said flat front face is aligned with a horizontal plane.

According to one embodiment, the method 100 comprises a step of storing 112 "E-STOR" the aforesaid difference value calculated in step 111 "E-CALC", for example, associating it with the theoretical pointing direction.

According to one embodiment, as shown by the arrow 113, the aforementioned steps of sending 103, acquiring 107 and calculating 111, and possibly also the step of storing 112, are repeatedly performed changing in step 103 the theoretical direction selected from said plurality of theoretical directions and consequently varying the data of the control signal W1. Preferably, the aforesaid steps of sending 103, acquiring 107 and calculating 111, are repeatedly carried out for a number of times exceeding 100, each corresponding to a selected theoretical pointing direction of the steerable antenna 10. For example, the aforesaid steps of sending 103, acquiring 107 and calculating 111, and possibly the step of storing 112, are repeated in order to perform the acquisition of the step 107 for a number of theoretical pointing directions greater than or equal to 100, for example equal to 516.

According to one embodiment, the aforesaid at least one point P1, P2, P3 is situated on a flat surface portion of said outer surface of the body of the transmitter and/or receiver device 11. For example, if said device body comprises a flat front face said surface portion is the surface of said flat face.

According to one embodiment, the aforesaid at least one point comprises at least three points P1, P2, P3, and in the aforesaid step of acquiring 107 at least three corresponding measurements of position are acquired keeping said receiver and/or transmitter device 11 in a fixed position and moving the measuring probe 5. Preferably, the aforementioned at least three points P1, P2, P3 belong to a same circumference 15. More preferably, the aforesaid flat face of the transmitter and/or receiver device 11 has a circular shape and the aforesaid circumference 15 has a radius equal to half, or approximately half, the radius of the flat face.

It is to be noted that if the aforesaid face is flat, the aforesaid at least three points P1, P2, P3 make it possible to identify a plane perpendicular to the real pointing direction of the steerable antenna 10.

According to one embodiment, the electromechanical movement and support system 12,13,14 comprises a cardanic support which makes it possible to rotate the transmitter and/or receiver device 11 along two axes orthogonal to each other. In such embodiment, preferably said axes are a vertical axis and a horizontal axis and said control signal data W1 comprise a theoretical azimuth value and a theoretical elevation value.

In such embodiment, in response to such control signal W1, the electromechanical movement and support system 12,13,14 is such as to move the receiver and/or transmitter device 11, so that said device 11 points along a theoretical pointing direction defined by the aforesaid azimuth and elevation values. According to one embodiment, it may be provided that the steerable antenna 10 is fitted on board with two angular sensors (for example a resolver associated with the elevation motor and a resolver associated with the azimuth motor) and that after the aforesaid movement a control step 104 "A-CHECK1" is carried out which provides for the acquisition by the electronic control unit 3 of the values read by said angular sensors (in the example in the figure the acquisition takes place via the signal R1) and for checking that the difference between the measured values (i.e. values read) on-board the steerable antenna 10 and the theoretical values of elevation and azimuth are of a modulus below a predetermined limit value. As indicated by the block 105 of the flowchart in Figure 2, if such verification is successful the method 100 provides for a transition to the subsequent steps, otherwise a repetition (arrow 106) of the verification step 104 may be provided for, or the assembly of the steerable antenna 10 may be verified to remedy an incorrect assembly or the steerable antenna 10 may be labelled as unreliable for the aforesaid theoretical pointing direction.

Jointly or separately from the aforesaid control phase 104 "A-CHECK1", a further control step 108 "A-CHECK2" may be provided for in the method 100 in the case in which the measuring probe 5 is fitted with a touch probe, adapted to verify that during the previous acquisition step 107 P_GET the movement of the machine 2 has not imparted, in particular via the touch probe of the probe 5, excessive mechanical stress to the transmitter and/or receiver device 11.

Preferably, the control step 108 "A-CHECK2" comprises the operations of:
- estimating a stress value correlated to a force of impact during said acquisition step 107 due to the contact of said probe with said surface;
- comparing said stress value with a pre-defined threshold;
and the method 100, if the stress value estimated exceeds a predefined threshold (conditional block 110 in figure 2), comprises a step of rejecting said acquired measurement and repeating (arrow 109) the acquisition step 107 reducing the speed of movement of the measuring probe 5.

According to one embodiment, the stress value is measured by reading some values (signalR1), for example of angular values, detected by one or more sensors provided on-board the steerable antenna 10, for example by the resolvers associated with the azimuth and elevation motors 12, 13 provided in the case in which the electromechanical movement and support system of the transmitter and/or receiver device 11 is an altazimuth system. In a preferred embodiment, the aforesaid stress value is estimated by calculating the mean and variance of each of the angular values read.

As may be seen from the above description a method 100 of characterisation of the pointing errors of a steerable antenna of the type described above makes it possible to achieve the aforementioned purposes with reference to the state of the prior art.

Without prejudice to the principle of the invention, the embodiments and construction details may be varied widely with respect to what has been described and illustrated purely by way of a non-limiting example, without thereby departing from the scope of the invention as defined in the appended claims.

## Claims

1. Method (100) for characterising pointing errors of a steerable antenna (10), wherein the antenna comprises:
- a receiver and/or transmitter device of electromagnetic radiations (11), having a device body delimited by an outer surface:
- an electromechanical movement and support system which permits the rotation of the receiver and/or transmitter device (11) in space and which is adapted to receive at least one control signal (W1) containing control data adapted to define a theoretical pointing direction selected from a plurality of preselected theoretical pointing directions and to rotate the receiver and/or transmitter device (11) in response to said reception;
the method (100) comprising the steps of:
- positioning (101) the steerable antenna (10) in a volume of action of a coordinate measurement numerical control machine (2), the machine comprising a measuring probe (5) and a movement system (6,7,8) of the measuring probe (5) in the volume of action of the machine (2);
- sending (103) the aforesaid control signal (W1) to the electromechanical movement and support system (12, 13, 14) to orient the transmitter and/or receiver device (11) ;
- acquiring (107) by means of said machine (2), moving said measuring probe (5), a measurement of the position in space of at least a point of said external surface of the device body;
- calculating (111) by means of said acquired measurement a real pointing direction, which on account of said errors may be different from said selected theoretical pointing direction, and calculating at least a difference value between said theoretical pointing direction and said real pointing direction, said difference value representing the pointing error of the steerable antenna (10).

2. Method (100) for the characterisation of pointing errors according to claim 1, wherein said steps of sending (103), acquiring (107) and calculating (111) are repeatedly performed changing the theoretical direction selected from among said plurality of theoretical directions and thus varying the data of the control signal (W1).

3. Method (100) for the characterisation of pointing errors according to claim 2, wherein said steps of sending (103), acquiring (107) and calculating (111) are repeatedly performed for a number of times greater than 100.

4. Method (100) for the characterisation of pointing errors according to any of the previous claims, wherein said at least one point (P1, P2, P3) is located on a portion of flat surface of said external surface.

5. Method (100) for the characterisation of pointing errors according to claim 4, wherein said device body comprises a flat face and wherein said portion of surface is the surface of said flat face.

6. Method (100) for the characterisation of pointing errors according to claims 4 or 5, wherein said at least one point comprises at least three points (PI, P2, P3) and wherein in said acquisition step (107) at least three corresponding position measurements are acquired keeping said receiver and/or transmitter device (11) in a fixed position.

7. Method (100) for the characterisation of pointing errors according to claim 6, wherein said at least three points (PI, P2, P3) belong to a same circumference (15).

8. Method (100) for the characterisation of pointing errors according to claim 7, wherein said flat face has a circular shape and wherein said circumference (15) has a radius equal to half or approximately half the radius of the flat face.

9. Method (100) for the characterisation of pointing errors according to any of the previous claims, wherein said electromechanical movement and support system comprises a cardanic support which permits the rotation of the transmitter/receiver device (11) along two axes orthogonal to each other, wherein said axes are a vertical axis and a horizontal axis and wherein the control signal data comprise an azimuth value and an elevation value.

10. Method (100) for the characterisation of pointing errors according to any of the previous claims, wherein the measuring probe (5) comprises a laser sensor.

11. Method (100) for the characterisation of pointing errors according to any of the previous claims from 1 to 9, wherein the measuring probe (5) comprises a touch probe and wherein the step of acquiring (107) said position measurement comprises an operation of moving said probe so that it touches said surface in said point (PI, P2, P3).

12. Method (100) for the characterisation of pointing errors according to claim 11, comprising a control step (108), comprising the operations of:
- estimating a stress value correlated to a force of impact during said acquisition step (107) due to the contact of said probe with said surface;
- comparing said stress value with a pre-defined threshold;
and wherein the method (100), if the stress value estimated exceeds a predefined threshold in modulus, comprises a step of rejecting said acquired measurement and repeating (109) the acquisition step (107) reducing the speed of movement of the measuring probe (5).

13. Method (100) for the characterisation of pointing errors according to any of the previous claims, wherein said machine (2) comprises a stabilised support surface (28), and wherein said step of positioning (101) the steerable antenna comprises an operation of stably attaching said electromechanical movement and support system to said support surface (28).

14. Method (100) for the characterisation of pointing errors according to claim 13, comprising an initial calibration step (102) comprising an operation of measuring the position in space of a known reference point of said steerable antenna (10) and of setting a measurement reference system centred on said measured position.

15. System (1) for characterising pointing errors of a steerable antenna (10), comprising:
- said coordinate measurement numerical control machine (2);
- an electronic control unit (3) operatively connected to said machine (2) and to said steerable antenna and programmed to control said machine and the electromechanical movement and support system so as to carry out a method (100) according to any of the previous claims.
